# EUROPÄISCHE PATENTSCHRIFT

(11) **EP 3 580 824 B1**
(45) Veröffentlichungstag und Bekanntmachung des Hinweises auf die Patenterteilung: **07.06.2023**
(21) Anmeldenummer: 18700487.4
(22) Anmeldetag: 15.01.2018
(51) Int. Cl.: H02H 7/16, H02H 9/00, H05B 39/02

(54) **SCHALTUNG ZUR EINSCHALTSTROMBEGRENZUNG BEI EINEM NETZTEIL**
CIRCUIT FOR LIMITING THE MAKING CURRENT IN A POWER SUPPLY UNIT
CIRCUIT DE LIMITATION DU COURANT D'APPEL POUR UN BLOC D'ALIMENTATION

(30) Priorität: 13.02.2017 DE 202017100740 U; 24.02.2017 AT 4017 U; 27.06.2017 AT 14017 U
(43) Veröffentlichungstag der Anmeldung: 18.12.2019
(60) Teilanmeldung: 21202843.5
(73) Patentinhaber: Tridonic GmbH & Co KG, 6851 Dornbirn (AT)
(72) Erfinder: STARK, Stefan, 6835 Muntlix (AT); HAUER, Lukas, 6841 Mäder (AT); SCHMÖLZER, Andreas, 6820 Frastanz (AT)
(74) Vertreter: Beder, Jens
(86) Internationale Anmeldenummer: PCT/EP2018/050818
(87) Internationale Veröffentlichungsnummer: WO 2018/145857

(56) Entgegenhaltungen:
- EP-A1- 0 272 514
- EP-A2- 0 569 883
- EP-A2- 2 249 627
- US-A1- 2010 253 413

## Beschreibung

Die vorliegende Erfindung betrifft eine Schaltung zur Einschaltstrombegrenzung, die in Netzteilen von Betriebsgeräten zum Betreiben von Leuchtmitteln eingesetzt werden kann.

Netz- und Betriebsgeräte weisen eingangsseitig meist einen von einem Netzgleichrichter gespeisten Speicherkondensator auf, der beim Einschalten oder Anschießen des Netz- bzw. Betriebsgerätes an die Netzspannung kurzeitig einen sehr hohen Einschalt- bzw. Ladestrom bewirken kann. Die Höhe des Einschaltstroms hängt von der Kapazität, der Restladung und dem Einschaltzeitpunkt bezüglich des Verlaufs der Netzwechselspannung ab. Werden mehrere Leuchten mit solchen Betriebsgeräten als Gruppe gemeinsam eingeschaltet, können die sich addierenden Einschaltströme der Geräte ein Auslösen der vorgeschalteten Sicherung herbeiführen.

Um dies zu vermeiden schlägt die DE 10 2011 001990 A1 ein Verfahren zur Einschaltstrombegrenzung vor, bei dem die Speicherkondensatoren von durch eine Netzwechselspannung gespeisten Vorschaltgeräten zu verschiedenen Zeiten nahe dem Spannungsnulldurchgang verzögert eingeschaltet werden. Die einzelnen Einschaltzeitpunkte bestimmen sich aus unterschiedlichen Wartezeiten nach der Erfassung des Nulldurchgangs oder nach Erfassung eines Einschaltsignals. Gemäß der DE 10 2011 001990 A1 wird der Detektor für den Spannungsnulldurchgang und der ein Flipflop aufweisende Einschaltsignalgenerator von einem aus der gleichgerichteten Netzspannung gespeisten Kleinspannungserzeuger versorgt, um ein kontrolliertes Einschalten auch vor dem Erreichen des Betriebszustands zu ermöglichen.

Die EP 2 249 627 A2 offenbart eine Leistungsfaktor-Korrekturschaltung, dessen Speicherkondensator zur Einschaltstrombegrenzung mittels einem Schalter jeweils in einem Nulldurchgang der anliegenden Netzspannung zugeschaltet, und vor einer darauffolgenden Scheitelspannung der Netzspannung wieder abgeschaltet wird.

Eine Schaltung gemäß dem Oberbegriff des beigefügten Anspruches 1 ist in der US 2010/253413 A1 beschrieben.

Einfache Netzteile von Betriebsgeräten mit Gleichrichter und nachfolgendem Speicher-/Glättungskondensator erzeugen während des Betriebs im Stromnetz zudem Oberwellenströme, da das Netzteil dem Stromnetz nur dann einen Strom zum Nachladen des Speicherkondensators entnimmt, wenn die sinusförmige Eingangsspannung größer als die Spannung am Kondensator ist, was zu einer kurzzeitigen hohen Stromaufnahme führt.

Solchen Oberwellenströmen/Oberschwingungen kann durch eine Schaltung zur Korrektur des Leistungsfaktors (Power Factor Correction) mit einem Hochsetzsteller, auch Aufwärtswandler genannt (englisch Boost-Converter), entgegengewirkt werden. Dabei sind die Schaltzeiten des mit einer pulsweitenmodulierten Steuerspannung ein- und ausgeschalteten Schalters des Hochsetzstellers so gewählt, dass der Eingangsstrom der Schaltung einem sinusförmigen Verlauf folgt, der in Phase mit dem Verlauf der Eingangsspannung ist.

Eine Schaltung zur Einschaltstrombegrenzung bei einem Hochsetzsteller, in der ein Einschalten des Speicherkondensators erst im Nulldurchgang der gleichgerichteten, sinusförmigen Netzspannung erfolgt, ist aus der EP 0 637 118 A1 bekannt.

Für die Bestimmung des Nulldurchgangs und das Einschalten des Speicherkondensators in dem Zeitraum vom Netzanschluss bis zum Beginn des Ladevorgangs vor der Betriebsaufnahme des Netz- bzw. Betriebsgeräts, ist eine spezielle Schaltung nötig, die mit Energie versorgt werden muss. Dies macht die Geräte teuer und führt zu einem höheren Energieverbrauch.

Der Erfindung liegt die Aufgabe zugrunde, Vorrichtungen und Verfahren anzugeben, die die beschriebenen Probleme verringern. Aufgabe ist es insbesondere, eine Schaltungsanordnung zur Einschaltstrombegrenzung bereitzustellen, mit der der Einschaltstrom mit einem einfachen und kostengünstigen Aufbau verringert werden kann und die einen niedrigen Energieverbrauch aufweist.

Diese Aufgabe wird gemäß den Merkmalen des unabhängigen Anspruch 1 gelöst. Die Erfindung wird durch die Merkmale der abhängigen Ansprüche weitergebildet.

Gemäß der vorliegenden Erfindung weist eine Schaltung zur Strombegrenzung beim Einschalten oder Anschließen eines Netzteils, das ein eigenständiges Gerät oder eine Baugruppe zur Energieversorgung in einem Gerät, beispielsweise einem Betriebsgerät zum Betreiben von Leuchtmitteln, sein kann, zumindest einen ersten Speicherkondensator und einen zweiten Speicherkondensator, die gemeinsam eine Spannungsquelle für an das Netzteil angeschlossene Komponenten bilden, und einen Schalter, mittels dem der zweite Speicherkondensator bezüglich des Beginns des Ladens des ersten Speicherkondensators zeitverzögert eingeschaltet wird, auf.

Die Gesamtkapazität nach der Betriebsaufnahme des Netzteils im stabilen Zustand wird aus beiden Speicherkondensatoren gebildet, wobei zur Reduzierung des Einschaltstroms die Speicherkondensatoren mittels des Schalters nacheinander mit dem Stromnetz verbunden werden und somit statt einem hohen Einschaltstromstoß zwei kleinere auftreten. Bei vielen Anwendungen sind aus Gründen der Baugröße oder Lebensdauer bereits mehrere parallel verschaltete Speicherkondensatoren vorgesehen, so dass die Aufteilung der Kapazität keine zusätzlichen Kosten verursacht und nur ein zusätzlicher Schalter und dessen Ansteuerung vorzusehen ist. Das Laden des ersten Speicherkondensators kann sofort mit dem Einschalten oder Anschließen des Netzteils erfolgen.

Die Schaltung ist eine Leistungsfaktor-Korrekturschaltung, wobei die Ansteuerung des Schalters zum Beginnen des Ladens des zweiten Speicherkondensators von einer Steuereinrichtung des Netzteils, wie einem Mikrocontroller, erfolgt, die eine von dem Netzteil zu speisende Komponente darstellt und die das Einschalten des Schalters mit ihrer Betriebsaufnahme oder zu einem späteren Zeitpunkt veranlasst, wobei die Betriebsaufnahme zu einem Zeitpunkt erfolgt, bei dem der mit dem Stromnetz verbundene erste Speicherkondensator einen stabilen Arbeitszustand bzw. einen bestimmten Ladezustand erreicht hat und der Schalter den zum ersten Speicherkondensator parallel geschalteten zweiten Speicherkondensator von dem ersten Speicherkondensator bis zu dem Zeitpunkt der Betriebsaufnahmen bzw. des späteren Zeitpunkts trennt. Auf diese Weise sind keine zusätzlichen Einrichtungen zum Ermitteln des Einschaltzeitpunkts, zum Einschalten des Schalters und zur Hilfsenergieversorgung nötig. Gemäß einer nicht unter den Anspruchsgegenstand fallenden Ausführung ist der Schalter eine von dem Netzteil zu speisende Komponente, so dass er automatisch mit Erreichen des stabilen Arbeitszustands bzw. des bestimmten Ladezustands einschaltet.

Der Schalter kann ein Bipolartransistor mit isolierter Gate-Elektrode sein.

Die zwei oder mehr Speicherkondensatoren können gleiche oder unterschiedliche Kapazitäten aufweisen. Der erste Speicherkondensator kann kleiner als der zweite Speicherkondensator sein. Da beim Einschalten und dem damit verbundenen Ladebeginn des ersten Kondensators auch andere Bauteilekapazitäten geladen werden, wird so vermieden, dass der Einschaltpeak des ersten Kondensators größer ist als beim zweiten Kondensator. Insbesondere ist auch von Vorteil, wenn der zweite Speicherkondensator bei einem Spannungsminimum der Ladespannung eingeschaltet wird, wodurch beide Einschaltströme weiter verringert werden können. Hierzu können eine Einrichtung zum Ermitteln eines Spannungsminimums der Ladespannung des zweiten Speicherkondensators und eine Einrichtung zum Einschalten des Schalters bei dem ermittelten Spannungsminimum vorgesehen sein. Zumindest eine der Einrichtungen kann separat aufgeführt oder in die Steuereinrichtung intergiert sein.

Um den Energieverbrauch zu reduzieren, kann die Schaltung zusätzlich eine Abschalteinrichtung zum Abschalten der Ermittlungs-Einrichtung, nachdem der Schalter eingeschaltet wurde, aufweisen.

Die Steuereinrichtung kann zudem dazu ausgebildet sein, den zweiten und/oder die weiteren Speicherkondensatoren in Abhängigkeit der von dem Netzteil abzugebenden Leistung zu- und/oder abzuschalten.

Die Schaltung kann Bestandteil eines Betriebsgeräts für Leuchtmittel sein.

Gemäß der vorliegenden Erfindung weist ein Betriebsgerät für Leuchtmittel eine der beschriebenen Schaltungen auf.

Gemäß einer nicht unter den Anspruchsgegenstand fallenden Ausführung kann, eine Schaltung zur Einschaltstrombegrenzung bei einem Netzteil zumindest einen Speicherkondensator, der eine Spannungsquelle für von dem Netzteil zu versorgende Komponenten bildet und von einer pulsierenden Gleichspannung geladen werden kann, einen Schalter zum Zuschalten einer Ladespannung an den Speicherkondensator zur Betriebsaufnahme, eine Einrichtung zum Ermitteln eines Spannungsminimums der Ladespannung und zum Einschalten des Schalters bei einem Spannungsminimum, und eine Abschalteinrichtung zum Abschalten der Ermittlungs-Einrichtung nachdem der Schalter eingeschaltet wurde oder nach der Betriebsaufnahme, aufweisen.

Zusätzlich kann eine Einrichtung zum Erzeugen einer Hilfsspannung zur Versorgung der Ermittlungs-Einrichtung vorgesehen sein, welche die Hilfsspannung aus der pulsierenden Gleichspannung erzeugt.

Die Abschalteinrichtung kann eine von dem Netzteil zu speisende Komponente darstellen, welche mit Energie versorgt und aktiviert wird, wenn der Speicherkondensator einen bestimmten Ladezustand bzw. einen stabilen Arbeitszustand (z.B. bestimmte Schwankungsbreite der Änderung im Ladezustand) erreicht.

Alternativ oder zusätzlich kann die Abschalteinrichtung durch eine zumindest das Netzteil steuernde Steuervorrichtung gebildet sein.

Die Schaltung kann eine Leistungsfaktor-Korrekturschaltung sein, wobei die Steuervorrichtung dazu ausgelegt ist, die Leistungsfaktor-Korrektur zu steuern.

Die Ladespannung kann eine gleichgerichtete Wechselspannung sein, wobei die Ermittlungs-Einrichtung dazu ausgelegt ist, den Scheitelwert der gleichgerichteten Wechselspannung zu detektieren, den Zeitpunkt des Spannungsminimums auf der Grundlage des detektierten Scheitelwerts zu ermitteln und ab dem Zeitpunkt ein Einschaltsignal mittels einem von der Hilfsspannungs-Erzeugungseinrichtung und der Stromversorgungsanordnung speisbaren Latch oder Flip-Flop an den Schalter auszugeben.

Nachfolgend wird die Erfindung anhand der beiliegenden Zeichnungen näher erläutert. Es zeigen:
Fig. 1: eine Schaltung zur Einschaltstrombegrenzung bei einem Netzteil nach einem Ausführungsbeispiel gemäß der vorliegenden Erfindung,
Fig. 2: eine Schaltung zur Einschaltstrombegrenzung bei einem Netzteil gemäß einer nicht unter den Anspruchsgegenstand fallenden Ausführung,
Fig. 3: eine Schaltung einer Hilfsspannungs-Erzeugungseinrichtung,
Fig. 4: eine Schaltung eines Ladespannung-Detektors, und
Fig. 5: eine Schaltung einer Schalteransteuerungs-Einrichtung.

Komponenten mit gleichen Funktionen sind in den Figuren mit gleichen Bezugszeichen gekennzeichnet.

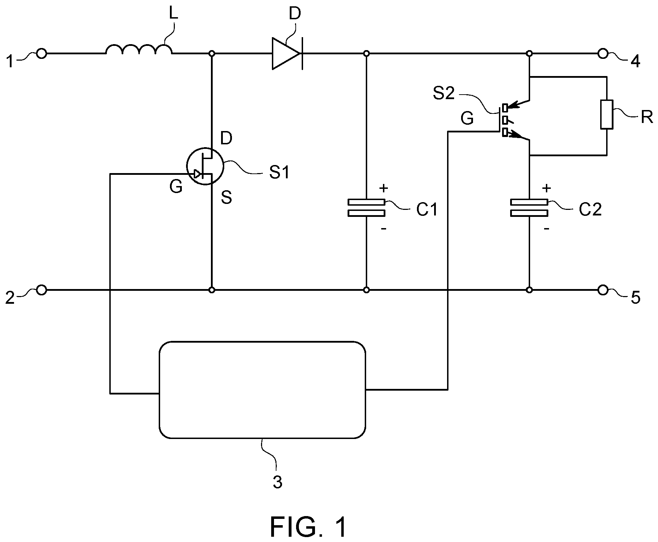

Fig. 1 zeigt ein Schaltbild einer Schaltung zur Korrektur des Leistungsfaktors mit Einschaltstrombegrenzung, welche in einem Netzteil eines Betriebsgeräts für Leuchtmittel eingesetzt werden kann und der über die Eingangsanschlüsse 1 und 2 eine von einem Netzgleichrichter des Netzteils (nicht gezeigt) gleichgerichtete Wechselspannung zuführbar ist, mit der zunächst der erste Speicherkondensator C1 und dann der zweite Speicherkondensator C2 geladen wird.

Zur Korrektur des Leistungsfaktors weist die Schaltung einen aus einem Schalter S1, einer Spule L, einer Diode D, und den Speicherkondensatoren C1 und C2 bestehenden Hochsetzsteller auf, der von einer Steuereinrichtung 3 gesteuert oder geregelt wird. Die Speicherkondensatoren C1 und C2 bilden im Betrieb des Hochsetzstellers gemeinsam eine Spannungsquelle für an den Ausgangsanschlüssen 4 und 5 angeschlossene Verbraucher. Mit den Ausgangsanschlüssen 4 und 5 können eine oder mehrere Versorgungseinrichtungen verbunden sein, welche eine Versorgungsspannung für die Steuereinrichtung 3 und andere Komponenten der Schaltung erzeugen.

Zusätzlich weist die Schaltung einen von der Steuereinrichtung 3 steuerbaren Schalter S2 auf, mit dem der zum ersten Speicherkondensator C1 parallel geschaltete zweite Speicherkondensator C2 von diesem bis zum Zeitpunkt der Betriebsaufnahmen des Hochsetzstellers getrennt werden kann.

Zumindest einer der Schalter S1 und S2 kann ein Leistungsschalter, ein Feldeffekttransistor, ein Bipolartransistor oder ein Transistor mit isolierter Gateelektrode sein.

Die Steuereinrichtung 3 kann eine integrierte Halbleiterschaltung sein oder eine integrierte Halbleiterschaltung umfassen. Die Steuereinrichtung 3 kann als ein Prozessor, ein Mikroprozessor, ein Controller, ein Mikrocontroller oder eine anwendungsspezifische Spezialschaltung (ASIC, "Application Specific Integrated Circuit") oder als eine Kombination der genannten Einheiten ausgestaltet sein. In dem Beispiel sind die Schalter S1 und S2 als separate Bauteile ausgeführt. Es ist jedoch auch möglich, dass zumindest der Schalter S2 bzw. dessen Schaltfunktion von der als Mikrocontroller ausgebildeten Steuereinrichtung 3 selbst ausgeführt wird.

Die Spule L ist mit der Diode D zwischen dem Eingangsanschluss 1 und einem Ausgangsanschluss 4 in Serie geschaltet. Der Schalter S1 ist mit einem Anschluss zwischen der Spule L und der Diode D und dem anderen Anschluss an den Eingangsanschluss 2 angekoppelt, welcher mit dem Ausgangsanschluss 5 verbunden ist und ein niedriges Potential (z.B. Masse) gegenüber dem Eingangsanschluss 1 aufweist.

Gemäß der vorliegenden Erfindung ist zum Zeitpunkt des Anschlusses des Netzteils an die Netzspannung oder des Einschaltens des Netzteils bzw. Betriebsgeräts der Schalter S2 geöffnet, so dass lediglich der erste Speicherkondensator C1 über die Spule L und die Diode D von dem vom Wechselrichter gelieferten Strom geladen wird. Ist der Speicherkondensator C1 komplett entladen und hat der pulsierende Gleichstrom zum Zeitpunkt des Einschaltens/Anschlusses einen Scheitelwert, fließt ein erster maximaler Ladestrom, der jedoch durch die in den zweiten Speicherkondensator C2 ausgelagerte Kapazität reduziert ist.

Der zweite Speicherkondensator C2 kann nach dem Abfallen des ersten Ladestroms eingeschaltet werden. In dem in Fig. 1 gezeigten Beispiel schaltet die Steuereinrichtung 3 den Schalter S2 ein. Die Steuereinrichtung 3 wird mit der an den Ausgangsanschlüssen 4, 5 bereitgestellten Energie bzw. von der Versorgungseinrichtung versorgt und nimmt ihren Betrieb auf bzw. schaltet den Schalter S2 ein, sobald an den Ausgangsanschlüssen 4, 5 eine bestimmte Spannung anliegt. Es ist jedoch auch möglich, dass der Schalter S2 erst nach Ablauf einer vorgegebenen oder zufällig gewählten Wartezeit geschlossen wird. Das Einschalten des Schalters S2 kann auch durch ein von der Steuereinrichtung 3 empfangenes Einschaltsignal erfolgen, mittels dem das Einschalten einer Vielzahl von Schaltern S2 anderer, an der gleichen Netzphase angeschlossener Netzgeräte so abgestimmt wird, dass zumindest ein Teil der Schalter S2 nicht zur gleichen Zeit eingeschaltet wird.

Gemäß einem Ausführungsbeispiel der vorliegenden Erfindung wird für das Einschalten des Schalters S2 von der Steuereinrichtung 3 oder einem zusätzlichen Detektor im Verlauf der Ladespannung des zweiten Speicherkondensators C2 der Zeitpunkt des Spannungsminimums ermittelt und der Schalter S2 bei oder nahe dem ermittelten Zeitpunkt eingeschaltet. Hierzu kann die Steuereinrichtung 3 beispielsweise den Spannungsverlauf an den Eingangsanschlüsse 1 und 2 erfassen und den Zeitpunkt des Spannungsminimums auf der Grundlage der Netzfrequenz berechnen oder das Minimum selbst detektieren.

Sind die beiden Speicherkondensatoren C1 und C2 geladen bzw. der Schalter S2 eingeschaltet, steuert die Steuereinrichtung 1 im pulsweitenmodulierten Betrieb des Hochsetzstellers die Schaltzeiten des Schalters S1 so, dass der Eingangsstrom der Schaltung einem sinusförmigen Verlauf folgt, der in Phase mit dem Verlauf der Eingangsspannung ist. Dabei fließt, wenn der Schalter S1 von der Steuereinrichtung 1 eingeschaltet wird, ein Strom von dem Eingangsanschluss 1 durch die Spule L, den Schalter S1 zum Eingangsanschluss 2. Nach dem Ausschalten des Schalters S1 treibt die Spule L einen Strom (Abmagnetisierungstrom) durch die Diode D und einen Strom durch die Speicherkondensatoren C1 und C2, welche dadurch nachgeladen werden.

Des Weiteren kann auch der Betriebszustand des Betriebsgerätes berücksichtigt werden. Kurze Netzunterbrüche und/oder Busspannungssprünge können einen Neustart des Betriebsgerätes verursachen. Die Schaltsignal-Abgabeeinrichtung 8 würde bei kurzzeitigen Netzunterbrüchen und/oder Busspannungssprüngen nicht schnell genug entladen, um den Schalter S2 auszuschalten. Das könnte dazu führen, dass der Schalter S2 eingeschaltet bleibt und beim Neustart des Betriebsgerätes keine Einschaltstrombegrenzung gewährleistet werden kann. Kurze Netzunterbrüche und/oder Busspannungssprünge, welche als Fehler erkannt werden können und als Betriebszustand in der Steuereinrichtung 3 gespeichert werden, können bei der Einschaltstrombegrenzung berücksichtigt werden. Dabei kann der Schalter S2 bei Erkennen von kurzen Netzunterbrüchen und/oder Busspannungssprüngen geöffnet werden, um eine Einschaltstrombegrenzung beim Neustart des Betriebsgerät zu gewährleisten.

Alternativ kann die Leistungskorrekturfaktorschaltung des Betriebsgerätes einen NTC Widerstand R aufweisen, welcher parallel zum Schalter S2 angeordnet ist und einen negativen Temperaturkoeffizienten aufweist. Bei einem Einschalten des Netzteils bzw. des Betriebsgeräts kann ein Verhalten bzw. ein Ablauf wie vorhin beschrieben auftreten. Zusätzlich kann der NTC Widerstand R eine anfängliche Strombegrenzung darstellen, um den Speicherkondensator C2 langsam zu laden, dieser Vorgang kann einige ms andauern. Nach dieser Zeit, vorzugsweise wenn der NTC Widerstand R keine Strombegrenzung mehr ermöglicht, da dieser bei einer Erwärmung seinen Widerstandswert verkleinert, kann der Schalter S2 aktiviert werden und den NTC Widerstand R überbrücken. Zusätzlich oder alternativ können die beiden Speicherkondensatoren C1 und C2 parallel verbunden sein und mit einem Schalter und/oder einem NTC Widerstand R in Serie verbunden sein. Dabei kann der NTC Widerstand R parallel zum Schalter angeordnet sein und wieder eine anfängliche Strombegrenzung bei einem Einschalten des Netzteils bzw. des Betriebsgeräts ermöglichen. Wenn sich der NTC Widerstand R erwärmt hat, kann der Schalter S2 den NTC Widerstand R überbrücken.

Alternativ kann der Widerstand R ein PTC mit positiven Temperaturkoeffizient sein. Dabei kann der Widerstand R bei Vorliegen eines Kurzschlusses des Schalters S2, welches ansonsten zu einem Ausfall des Betriebsgerätes führt, den Strom durch den Speicherkondensator C2 begrenzen und somit ein Zerstören des Betriebsgerätes verhindern.

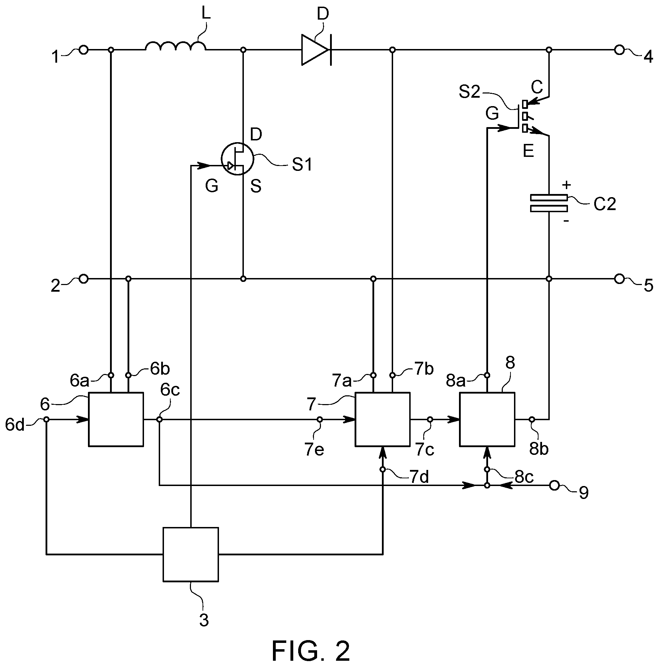

Fig. 2 zeigt eine Schaltung zur Korrektur des Leistungsfaktors mit Einschaltstrombegrenzung gemäß einer nicht unter den Anspruchsgegenstand fallenden Ausführung, in der der erste Speicherkondensator C1 fehlt. Dieser ist hier optional und kann bei Bedarf hinzugefügt werden.

Bei der in der Fig. 2 gezeigten Schaltung erfolgt ein Einschalten des Speicherkondensators C2 bzw. des Schalters S2 bei oder nahe einem Spannungsminimum der Ladespannung des Speicherkondensators C2. Hierzu weist die Schaltung eine Hilfsspannungs-Erzeugungseinrichtung 6 auf, die mit den Eingangsanschlüssen 1 und 2 verbunden ist und aus der an den Eingangsanschlüssen 1 und 2 anliegenden pulsierenden Gleichspannung eine Hilfsspannung für die Detektion des Spannungsminimums und das Einschalten des Schalters S2 erzeugt.

Ein von der Hilfsspannungs-Erzeugungseinrichtung 6 gespeister Detektor 7 ist mit den Ausgangsanschlüssen 4 und 5 verbunden, ermittelt ein Spannungsminimum der pulsierenden Gleichspannung bzw. den Zeitpunkt, bei dem die pulsierende Gleichspannung auf null abgefallen ist und gibt einen Schaltimpuls zu oder nahe diesem Zeitpunkt an eine Schaltsignal-Abgabeeinrichtung 8 aus. Die von der Hilfsspannungs-Erzeugungseinrichtung 6 gespeiste Schaltsignal-Abgabeeinrichtung 8 erzeugt bei Empfang des Schaltimpulses ein Einschaltsignal für den Schalter S2 und schaltet diesen ein, so dass das Laden des Speicherkondensators C2 bei dem ermittelten Spannungsminimum beginnt, was einen geringen Einschaltstrom bewirkt. Der Ladestrom/Einschaltstrom fließt dabei von dem Eingangsanschluss 1, über die Spule L, die Diode D, den geschlossenen Schalter S2 und den Speicherkondensator C2 zu dem Eingangsanschluss 2. Der Schalter S1 ist geschlossen und die Steuereinrichtung 3 noch inaktiv.

Die Steuereinrichtung 3 wird aktiviert und mit der an den Ausgangsanschlüssen 4, 5 bereitgestellten Energie bzw. von der Versorgungseinrichtung versorgt, wenn die Spannung an den Ausgangsanschlüssen 4, 5 oder der Ladestrom einen stabilen Zustand (konstanter mittlerer Ladestrom/Spannung) erreicht hat. Eine Versorgung der Schaltsignal-Abgabeeinrichtung 8 mit der an den Ausgangsanschlüssen 4, 5 bereitgestellten Energie bzw. von der Versorgungseinrichtung ist auch über den Anschluss 9 möglich. Sobald die Steuereinrichtung 3 aktiviert ist oder die Schaltung den Betrieb aufgenommen hat (Steuereinrichtung 3 steuert den Schalter S1), werden die Hilfsspannungs-Erzeugungseinrichtung 6 und der Detektor 7 von der Steuereinrichtung 3 abgeschaltet, um Energie zu sparen.

In der in der Fig. 1 gezeigten Schaltung steuert die Steuereinrichtung 3 den Schalter S2. Es ist jedoch auch möglich den Schalter S2 mittels der die Hilfsspannungs-Erzeugungseinrichtung 6, den Detektor 7 und die Schaltsignal-Abgabeeinrichtung 8 aufweisenden Anordnungen zu schalten.

Die Hilfsspannungs-Erzeugungseinrichtung 6 kann zur Erzeugung der Hilfsspannung Primärzellen oder über die Eingangsanschlüsse 1 und 2 ladbare Sekundärzellen aufweisen.

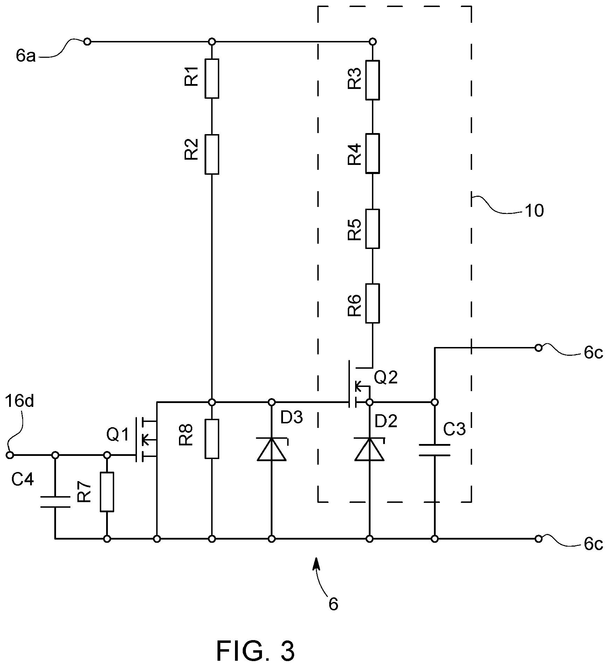

Fig. 3 zeigt eine Schaltung der Hilfsspannungs-Erzeugungseinrichtung 6, bei der die Hilfsspannung mittels einer mit einem Pufferkondensator C3 parallel geschalteten Z-Diode D2 erzeugt wird. Die Anode der Z-Diode D2 ist über einen Schalter Q2 und eine Reihenschaltung aus vier Widerständen R3..R6 mit dem Eingangsanschluss 1 bzw. Schaltungspunkt 6a verbunden.

Die Widerstände R3..R6, die Z-Diode D2 und der Pufferkondensator C3 bilden einen Kleinspannungserzeuger 10 zum Erzeugen der Hilfsspannung, welche zwischen den Schaltungspunkten 6c und 6d, parallel zum Pufferkondensator C3, anliegt. Die anderen Elemente der Schaltung, insbesondere die Schalter Q1 und Q2, dienen der Abschaltfunktion der Hilfsspannungs-Erzeugungseinrichtung 6.

Beim Anliegen der gleichgerichteten Wechselspannung an den Eingangsanschlüssen 1 und 2 bzw. den Schaltungspunkten 6a und 6b wird mit dem aus den Widerständen R1..R3 bestehenden Spannungsteiler eine Spannung zum Einschalten des Schalter Q2 erzeugt. Zum Abschalten der Hilfsspannungs-Erzeugungseinrichtung 6 sendet die Steuereinrichtung 3 ein Einschaltsignal über den Schaltungspunkt 6d an den Schalter Q1, welcher die Spannung an dem Schalter Q2 absenkt, so dass dieser den Kleinspannungserzeuger 10 abschaltet.

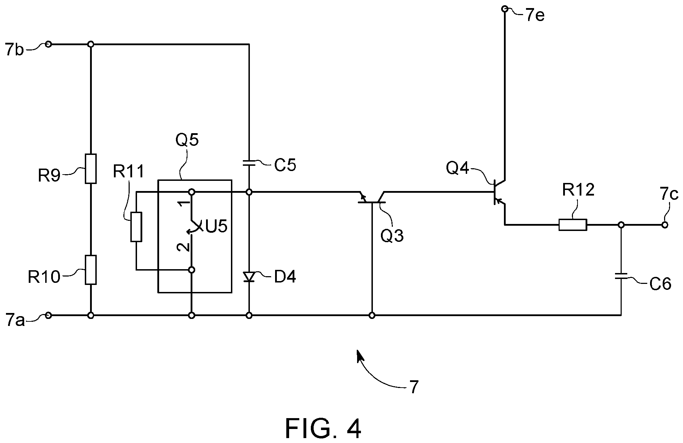

Fig. 4 zeigt eine Schaltung des Detektors 7, bei dem in einem ersten Schritt in dem Verlauf der gleichgerichteten Wechselspannung ein Scheitelwert detektiert und in einem zweiten Schritt nach Ablauf von einem Viertel der Periodenlänge der Netzspannung ein Einschaltsignal ausgegeben wird.

Die Schaltung des Detektors 7 weist einen Kondensator C5 und eine Diode 4 auf, die in Reihe zwischen den Eingangsanschlüssen 1 und 2 bzw. den Schaltungspunkten 7b und 7a geschaltet sind. Die Diode 4 ist mit einem über einen Schalter Q5 kurzschließbaren Widerstand R11 parallel verbunden und zwischen dem Kondensator C5 und der Diode D4 ist der Emitter-Anschluss eines Bipolartransistors Q3 angekoppelt, welcher einen Schalter Q4 steuert.

Ein Kondensator C6 ist über einen Widerstand R12 und den geschlossenen Schalter Q4 mit der an dem Schaltungspunkt 7e anliegenden Hilfsspannung ladbar. Der Kondensator C6 und der Widerstand R12 sind so bemessen, dass die Spannung am Kondensator C6 bzw. zwischen den Schaltungspunkten 7a und 7c nach dem Ablauf von einem Viertel der Periodenlänge einen Spannungswert (z.B. den der Hilfsspannung) erreicht, bei dem die mit dem Schaltungspunkt 7c verbundene Schaltsignal-Abgabeeinrichtung 8 ein Einschaltsignal erzeugt (zweiter Schritt). Das Laden des Kondensators C6 wird mit dem Einschalten des Schalters Q4 gestartet.

Der Scheitelwert wird mittels dem Kondensator C5 detektiert. Dieser lädt sich mit dem Ansteigen der gleichgerichteten Wechselspannung und entlädt sich mit deren Abfallen. Ist die Spannung am Emitter-Anschluss des Bipolartransistors Q3 null (Scheitelpunkt), wird der Schalter Q4 eingeschaltet.

Aufgabe der Schaltsignal-Abgabeeinrichtung 8 ist es, ein stabiles, von dem weiteren Spannungsverlauf am Kondensator C6 unabhängiges Einschaltsignal für den Schalter S2 zu erzeugen. Dies kann mit einem sowohl über den Anschluss 9 als auch von der Hilfsspannungs-Erzeugungseinrichtung 6 speisbaren Flipflop oder Latch erreicht werden.

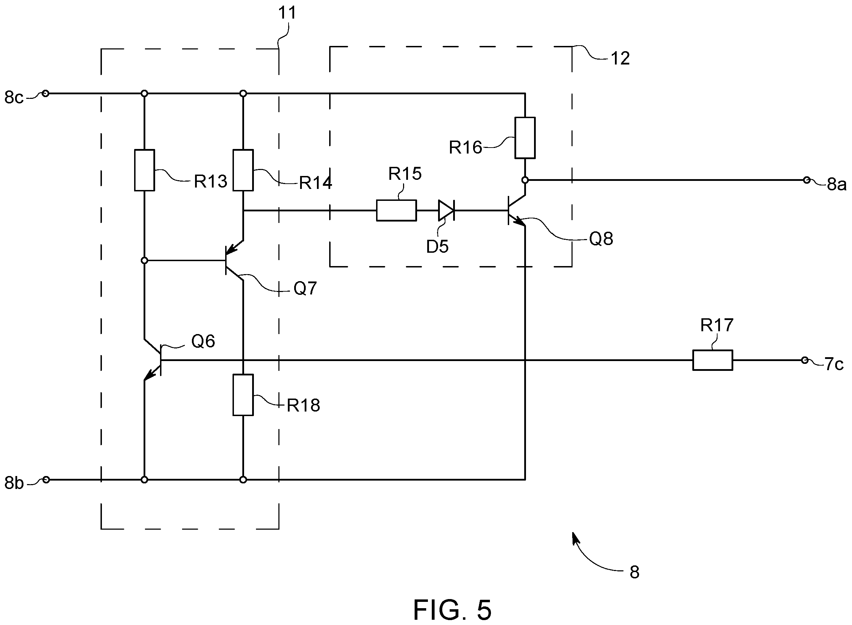

Fig. 5 zeigt eine Schaltung der Schaltsignal-Abgabeeinrichtung 8, die aus einem Latch 11 und einem Inverter 12 gebildet ist. Erreicht der Spannungswert am Schaltungspunkt 7c den vorgegebenen Spannungswert (Hilfsspannung), fällt die Spannung am Kollektor-Anschluss des Bipolartransistor Q7 auf null und der Inverter 12 springt von dem Potential am Schaltungspunkt 8b auf das Potential am Schaltungspunkt 8c, was dem Einschaltsignal für den Schalter S2 entspricht.

## Patentansprüche

1. Schaltung zur Einschaltstrombegrenzung bei einem Netzteil, mit
zumindest einem ersten Speicherkondensator (C1) und einem zweiten Speicherkondensator (C2), die gemeinsam eine Spannungsquelle für von dem Netzteil zu versorgende Komponenten bilden, und
einem Schalter (S2), mittels dem der zweite Speicherkondensator (C2) bezüglich des Beginns des Ladens des ersten Speicherkondensators (C1) zeitverzögert eingeschaltet wird, **dadurch gekennzeichnet, dass**
die Schaltung eine Leistungsfaktor-Korrekturschaltung ist und eine Steuereinrichtung (3) zum Steuern der Leistungsfaktor-Korrekturschaltung aufweist, und
die Steuereinrichtung (3) eine von dem Netzteil zu speisende Komponente darstellt und das Einschalten des Schalters (S2) mit ihrer Betriebsaufnahme oder zu einem späteren Zeitpunkt veranlasst, wobei
die Betriebsaufnahme zu einem Zeitpunkt erfolgt, bei dem der mit einem Stromnetz verbundene erste Speicherkondensator (C1) einen stabilen Arbeitszustand bzw. einen bestimmten Ladezustand erreicht hat, und
der Schalter (S2) den zum ersten Speicherkondensator (C1) parallel geschalteten zweiten Speicherkondensator (C2) von dem ersten Speicherkondensator (C1) bis zu dem Zeitpunkt der Betriebsaufnahmen bzw. des späteren Zeitpunkts trennt.

2. Schaltung nach Anspruch 1, wobei
der Schalter (S2) ein Bipolartransistor mit isolierter Gate-Elektrode ist.

3. Schaltung nach Anspruch 1 oder 2, wobei
die Kapazität des ersten Speicherkondensators (C1) kleiner als die Kapazität des zweiten Speicherkondensators (C2) ist.

4. Schaltung nach einem der Ansprüche 1 bis 3, mit
einer Einrichtung (7, 8) zum Ermitteln eines Spannungsminimums der Ladespannung des zweiten Speicherkondensators (C2), wobei die Steuereinrichtung (3) dazu ausgelegt ist, den Schalter (S2) bei dem ermittelten Spannungsminimum einzuschalten.

5. Schaltung nach einem der Ansprüche 1 bis 3, wobei
die Steuereinrichtung (3) dazu ausgelegt ist, ein Spannungsminimum der Ladespannung des zweiten Speicherkondensators (C2) zu ermitteln und den Schalter (S2) bei dem ermittelten Spannungsminimum einzuschalten.

6. Betriebsgerät für Leuchtmittel aufweisend eine Schaltung nach einem der Ansprüche 1 bis 5.

## Claims

1. Circuit for inrush-current limiting in a power supply unit, comprising
at least one first storage capacitor (C1) and a second storage capacitor (C2), which together form a voltage source for components to be supplied by the power supply unit, and
a switch (S2), by means of which the second storage capacitor (C2) is switched on in a time-delayed manner with respect to the start of the charging of the first storage capacitor (C1), **characterized in that**
the circuit is a power factor correction circuit and has a control device (3) for controlling the power factor correction circuit, and
the control device (3) represents a component to be fed by the power supply unit and causes the switch (S2) to be switched on at operation start-up of the control device or at a later time,
the operation start-up taking place at a time at which the first storage capacitor (C1) connected to a power supply system has reached a stable working state or a specific charging state, and
the switch (S2) disconnecting the second storage capacitor (C2), connected in parallel to the first storage capacitor (C1), from the first storage capacitor (C1) until the time of the operation start-ups or the later time.

2. Circuit according to claim 1, wherein
the switch (S2) is a bipolar transistor having an insulated gate electrode.

3. Circuit according to claim 1 or 2, wherein
the capacitance of the first storage capacitor (C1) is less than the capacitance of the second storage capacitor (C2).

4. Circuit according to any of claims 1 to 3, comprising
a device (7, 8) for determining a voltage minimum of the charging voltage of the second storage capacitor (C2), wherein the control device (3) is designed to switch on the switch (S2) at the determined voltage minimum.

5. Circuit according to any of claims 1 to 3, wherein
the control device (3) is designed to determine a voltage minimum of the charging voltage of the second storage capacitor (C2) and to switch on the switch (S2) at the determined voltage minimum.

6. Operating apparatus for lighting means, comprising a circuit according to any of claims 1 to 5.

## Revendications

1. Circuit destiné à la limitation de courant d'enclenchement dans une alimentation électrique, comportant
au moins un premier condensateur de stockage (C1) et un second condensateur de stockage (C2) qui forment ensemble une source de tension pour des composants à alimenter par l'alimentation électrique, et
un commutateur (S2) au moyen duquel le second condensateur de stockage (C2) est enclenché de manière différée par rapport au début de la charge du premier condensateur de stockage (C1), **caractérisé en ce que**
le circuit est un circuit de correction de facteur de puissance et présente un dispositif de commande (3) permettant de commander le circuit de correction de facteur de puissance, et
le dispositif de commande (3) constitue un composant à alimenter par l'alimentation électrique et provoque l'enclenchement du commutateur (S2) avec sa mise en service ou à un moment ultérieur, dans lequel
la mise en service a lieu à un moment où le premier condensateur de stockage (C1) connecté à un réseau électrique a atteint un état de fonctionnement stable ou un état de charge déterminé, et
le commutateur (S2) du second condensateur de stockage (C2) monté en parallèle avec le premier condensateur de stockage (C1) est séparé du premier condensateur de stockage (C1) jusqu'au moment des mises en service ou du moment ultérieur.

2. Circuit selon la revendication 1, dans lequel
le commutateur (S2) est un transistor bipolaire à électrode de grille isolée.

3. Circuit selon la revendication 1 ou 2, dans lequel
la capacité du premier condensateur de stockage (C1) est inférieure à la capacité du second condensateur de stockage (C2).

4. Circuit selon l'une des revendications 1 à 3, comportant
un dispositif (7, 8) permettant de définir un minimum de tension de la tension de charge du second condensateur de stockage (C2), dans lequel le dispositif de commande (3) est configuré pour enclencher le commutateur (S2) au minimum de tension défini.

5. Circuit selon l'une des revendications 1 à 3, dans lequel
le dispositif de commande (3) est configuré pour définir un minimum de tension de la tension de charge du second condensateur de stockage (C2) et pour enclencher le commutateur (S2) au minimum de tension défini.

6. Appareil de fonctionnement pour des moyens lumineux, présentant un circuit selon l'une des revendications 1 à 5.
